# EUROPEAN PATENT APPLICATION

(11) **EP 4 563 829 A1**
(43) Date of publication of application: **04.06.2025**
(21) Application number: 23213583.0
(22) Date of filing: 01.12.2023
(51) Int. Cl.: F16B 7/00, F16B 7/18, B07B 1/46

(54) **CONNECTING CLEAT FOR CONNECTING DECK RAILS IN VIBRATORY EQUIPMENT**

(71) Applicant: Sandvik Rock Processing Australia Pty Limited, Sunshine, 3020 VIC (AU)
(72) Inventor: Teyhan, Dough, Beresfield, 2322 (AU); Burgess, James, Victoria, 3020 (AU); Hood, Nick, Victoria, 3020 (AU); Thompson, Matt, Merewether, 2291 (AU)
(74) Representative: Sandvik

(57) **Abstract**

A connecting cleat (30) for connecting deck rails (24) to a cross beam (12) in a vibratory equipment (10) for processing a soil material, such as a vibratory screening machine or a vibratory feeder. The cleat (30) comprises a cleat body (31) defining a cleat inner circumference (37a) that curves about a cleat center axis (A1) of the cleat (30) for coaxial arrangement with a correspondingly curved cross beam outer circumference (29a) of the cross beam (12), and an end plate (32) extending in a radial direction of the cleat (30) and along a portion of the cleat inner circumference (37a) for connecting one or more deck rails (24) thereto. The cleat body (31) comprises at least one first mechanical attachment means (33, 33a, 33b) and at least one second mechanical attachment means (34) for attaching the cleat (30) to the cross beam (12). The first mechanical attachment means (33) forms with the second mechanical attachment means (34) a first central angle (C1) at the cleat center axis (A1) in an axial plane (A). The first central angle (C1) is in the range of 110 to 220 degrees.

## Description

### TECHNICAL FIELD

The present invention relates to the field of vibratory equipment, in particular vibratory screening machines and vibratory feeders. More in particular, the invention pertains to a connecting cleat for connecting deck rails in such vibratory equipment.

### BACKGROUND

As is commonly known in the mining and rock industry, vibratory equipment is conventionally utilized in the processing of earth material, for example for the purpose of separating material into fractions, a vibratory screening machine may be employed.

Materials subject to processing in such vibratory equipment include, not limited to metalliferous and non-metalliferous ore, rock and waste material, various earth materials as mentioned, which may also include soil materials such as coal.

In keeping with the example of a screening machine, a screening machine comprises a screening deck that receives the subject material. The screening deck comprises one or more deck panels, such as screening media, that are held and supported by an array of transverse cross beams via longitudinal deck rails, otherwise known as deck rails, that abut the deck panels and connecting cleats that connect the stringers with the cross beams. A vibration mechanism is provided and operable to vibrate the cross beams in a per se known fashion, whereby the vibrating movement of the cross beams is transferred to the deck rails and hence deck panels, for processing material thereon by excitation. The vibration mechanism may comprise exciters configured to vibrate the cross beams in accordance with different vibration patterns, such as two- or three-dimensional patterns, depending on application and desired result.

It is the primary function of the screening media to separate one or more oversize products from a material flow by allowing the finer material to fall through openings in the screening panels, for example to a second screening deck or as a finished product. Although the construction of a vibratory feeder may be similar to that of a screening device, in a vibratory feeder, instead of screening media, the screening deck may comprise blind deck panels, that is, deck panels that are absent openings.

As with any vibratory equipment, various components of a screening machine that are subject to movement may be stress prone and often dictates longevity of the machine due to fatigue. By way of example, oscillating forces in a screening machine causes significant mechanical stress in the mentioned cross beams that oscillate whilst supporting the load of the material being processed and why the cross beams have been found to be particularly fatigue prone.

In response to these issues, the applicant has devised a novel arrangement which addresses this problem.

### SUMMARY

In line with the observations detailed above, the present inventors have made valuable technical insights to solve or at least mitigate one or more of the challenges referred to in the previous section. These insights will be presented as inventive aspects below as well as in the detailed description section, the claims and the drawings to which reference is made. The list of inventive aspects is not to be seen as exhaustive but rather a summary of particularly beneficial inventive aspects.

Generally, in achieving attachment of a connecting cleat and the cross beam, some form of engagement with the structure of the cross beam is naturally required, such as the provision of through openings in the cross beam for receiving mounting bolts or like at the attachment points. Whilst such through openings infringe the structural integrity of the cross beam and taking into consideration that the cross beam in operation is subjected to stress, the structural infringement may be expected to be accompanied by adverse effects on the fatigue life thereof. These detrimental effects are advantageously eliminated or at least to some extent alleviated by the provision of a deck rail connecting cleat according to aspects of the invention.

The present invention contemplates the mechanical attachment means may advantageously be provided distanced from such areas or zones of the cross beam that are particularly fatigue prone. In particular, the mechanical attachment means of the cross beam may be provided at respective positions along the circumference of the cross beam that are distanced from the fatigue prone zones and with a desirable clearance thereto in order not to weaken the structural integrity of the cross beam in the vicinity of fatigue prone zones. Indeed, so long as the respective attachment points are sufficiently distanced from the high-stress zones, appreciable benefit may be realized.

Of course, also the weight of the connecting cleats will impact the magnitude of stress on the cross beams whereby weight saving thereof poses as a potential area of improvement as is also contemplated herein.

In one aspect, there is provided a connecting cleat for connecting deck rails to a cross beam in a vibratory equipment for processing a soil material, such as a vibratory screening machine or a vibratory feeder. The cleat comprises a cleat body defining a cleat inner circumference that curves about a cleat center axis of the cleat for coaxial arrangement with a correspondingly curved cross beam outer circumference of the cross beam. The cleat further comprising an end plate extending in a radial direction of the cleat and along a portion, such as a limited portion, of the cleat inner circumference for connecting one or more deck rails thereto. The cleat body comprises at least one first mechanical attachment means and at least one second mechanical attachment means for attaching the cleat to the cross beam.

In some aspects, the first mechanical attachment means forms with the second mechanical attachment means a first central angle at the cleat center axis in an axial plane. The first central angle may be in the range of 110 to 220 degrees, such as about 180 degrees.

In some aspects, the cross beam comprises a first cross beam aperture and a second cross beam aperture provided along the cross beam outer circumference, wherein the first cross beam aperture forms with the second cross beam aperture a central angle at the cross beam center axis, and wherein the central angle is in the range of 110 to 220 degrees, such as about 180 degrees.

In some aspects, the at least one first mechanical attachment means is provided proximal the end plate and the at least one second mechanical attachment means is provided distal the end plate relative the first mechanical attachment means.

In some aspects, the first mechanical attachment means and the second mechanical attachment means each comprises at least one cleat aperture extending radially through the cleat body. In some aspects, the first attachment means may comprise at least one first cleat aperture and the second mechanical attachment means comprises at least one second cleat aperture.

In some aspects, the end plate is provided asymmetrically relative the cleat body in the axial plane.

In some aspects, the end plate comprises third mechanical attachment means for connecting deck rails to the end plate when the cleat is mounted to the cross beam. In some aspects, the third mechanical attachment means comprises at least one set of through going axial apertures extending in an axial direction of the cleat along the cleat center axis.

In some aspects, the first attachment means is provided proximal to the third attachment means in relation to the second attachment means.

In some aspects, the first attachment means forms with the third attachment means a thirteenth central angle at the cleat center axis in the axial plane, and the second attachment means forms with the third attachment means a twelfth central angle at the cleat center axis , wherein the twelfth angle is greater than the thirteenth angle.

In some aspects, an end plate center plane of the end plate forms a central offset angle with the cleat center plane at the cleat center axis in the axial plane. The offset angle may be greater than zero. In some aspects, the central offset angle is in in the range of 5 to 55 degrees. In some aspects, the offset angle is in the range of 25 to 35 degrees. In some aspects, the offset angle is about 30 degrees.

In some aspects, the curved cleat inner circumference is arc-circular in the axial plane and extends at least between the cleat first aperture to the cleat second aperture.

In some aspects, a width of the cleat body extends along the cleat center axis, wherein the width tapers from opposite free end portions of the cleat.

In some aspects, the cleat body is a cast element and the end plate is provided welded to the cleat body.

In some aspects, opposite cleat end portions of the cleat body form a central second angle at the cleat center axis. The second angle may be in the range of 132 to 242 degrees. In some aspects the second angle is in the range of 180 to 200 degrees. In some aspects, the second angle is about 222 degrees.

In some aspects, the end plate has an end plate center plane parallel the cleat center axis, wherein the end plate center plane forms respectively with the first attachment means a central seventh angle at the cleat center axis, and a central eighth angle with the second attachment means at the cleat center axis, wherein the central eighth angle is greater than the central seventh angle. For example, the eight central angle may be 1.5 times greater than the seventh central angle.

In some aspects, the end plate has an end plate center plane that is parallel to the cleat center axis. The end plate center plane forms with the first attachment means a central seventh angle at the cleat center axis. The central seventh angle may be in the range of 25 to 85 degrees. In particular, in some aspects the end plate center plane forms with a first cleat aperture center axis of the first cleat aperture the central seventh angle at the cleat center axis.

In some aspects, the end plate has an end plate center plane that is parallel the cleat center axis, wherein the end plate center plane forms with the second attachment means a central eighth angle at the cleat center axis. The central eighth angle may be in the range of 85 to 140 degrees. In particular the end plate center plane may form with a second cleat aperture center axis of the second cleat aperture the central eighth angle at the cleat center axis.

In one aspect, there is provided a vibratory equipment, such as a screening machine or a vibratory feeder, for processing a soil material. The vibratory equipment comprising at least one cross beam, such as a plurality of cross beams, extending in a direction transverse a longitudinal machine direction of the vibratory equipment for supporting a material processing deck of the vibratory equipment. The at least one cross beam comprises one or more connecting cleat, such as a plurality of connecting cleats, according to aspects of the disclosure. The connecting cleat connecting one or more deck rails of the deck to the at least one cross beam.

In some aspects, the vibratory equipment is configured to vibrate the cross beam such that a cross beam longitudinal center axis of the cross beam oscillates along a stroke line in a plane transverse a cross beam longitudinal center axis. In some aspects, respective first mechanical attachment means and second mechanical attachment means of the one or more cleat are arranged along a cross beam outer circumference of the cross beam to form respective central angles, such as the fifth angle and the sixth angle respectively, with the stroke line at the cross beam center axis. In some aspects, the central angles are in the range of 25 to 140 degrees respectively. In some aspects, the central angles are about 90 degrees.

In some aspects, the stroke line forms, in a plane transverse the cross beam center axis, a central stroke angle with any one or more of the machine direction and a horizontal plane. The stroke angle may be in the range of 30 to 90 degrees.

In some aspects, the vibratory equipment is configured to vibrate the cross beam in accordance with a linear vibration pattern.

In some aspects, the vibratory equipment detailed herein may be configured for processing any of metalliferous and non-metalliferous ore, rock and waste material, various earth materials as mentioned, which may also include soil materials such as coal.

The aforementioned aspects are associated with a number of advantages.

For example, one appreciates that by the configuration of the connecting cleat according to aspects of the disclosure, the structural integrity of the cross beam is maintained in the vicinity of the high stress zones, whereby improved fatigue life of the cross beam may be facilitated. Meanwhile, aspects of the disclosure ensure a firm attachment of the cleat to the cross beam. As such, the present invention represents a constructive measure for improving fatigue life of the cross beams of the vibratory machine.

One also appreciates that the configuration of the cleat in accordance with aspects of the disclosure advantageously facilitates a relatively low weight of the cleat. A reduced mass cleat requires less energy to accelerate, renders the cleat easier to accelerate and thus reduces stress on the cross beam.

Certain asymmetrical properties of the cleat detailed herein are associated with further advantages, for instance, when the stroke line makes an angle with a horizontal plane or the machine direction, the cleat may still be arranged on the cross beam such as to span well over the fatigue prone zones whilst the end plate is oriented substantially upwards, towards the deck of the vibratory machine.

Thus, the provision of such connecting cleat according to aspects will solve or at least mitigate at least the drawbacks identified in the background section of this document, while further advantageous embodiments will become apparent from the following description of embodiments of the invention with the aid of the drawings.

The embodiments of the present disclosure relate to all possible combinations of features recited in the appended claims. Additionally, it will be appreciated that all embodiments described with reference to the first aspect of the present disclosure may be combined with any embodiment described with reference to the second aspect of the present disclosure, and vice versa. The present disclosure encompasses also such embodiments.

### BRIEF DESCRIPTION OF DRAWINGS

It will be convenient to further describe the invention with reference to preferred embodiments of the present invention. Other embodiments are conceivable, and consequently, the particularity of the following discussion is not to be understood as superseding the generality of the preceding description of the invention, in the drawings:
Fig. 1 is a side perspective view of a vibratory equipment according to an embodiment of the invention.
Fig. 2 shows details of a deck mounted to a cross beam by means of a connecting cleat according to an embodiment.
Fig. 3 is an isometric view of a transverse cross beam of the vibrating equipment of Fig. 1 and a plurality of connecting cleats mounted to the cross beam, according to an embodiment.
Fig. 4 is an isometric view of a cleat according to an embodiment.
Fig. 5 is a schematic illustration of exemplary vibration patterns in a vibratory equipment as seen in an axial plane of the cross beam.
Fig. 6 is a side perspective view of a connecting cleat mounted to a cross beam of a vibratory equipment, as seen in an axial plane A of the connecting cleat, according to an embodiment.
Fig. 7 shows further details of the embodiment of Fig. 6.
Fig. 8 shows further details of the embodiment of Fig. 6.
Fig. 9 shows still further details of the embodiment of Fig. 6.
Fig. 10 shows details of a connecting cleat comprising gaskets, according to an embodiment.
Fig. 11a shows details of a connecting cleat comprising gaskets, according to an embodiment.
Fig. 11b shows further details of the embodiment of Fig. 11a.

### DETAILED DESCRIPTION

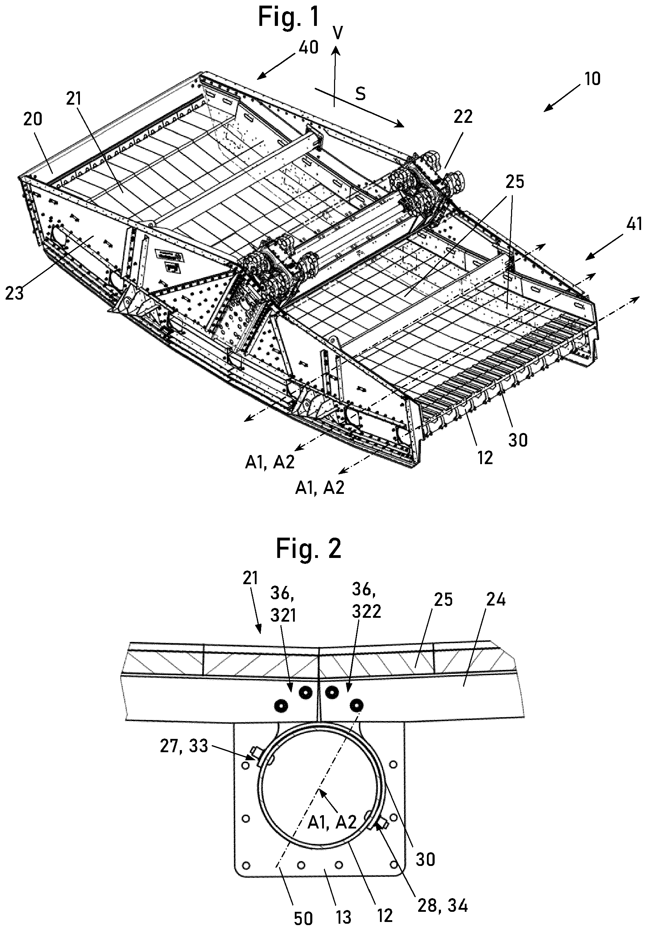

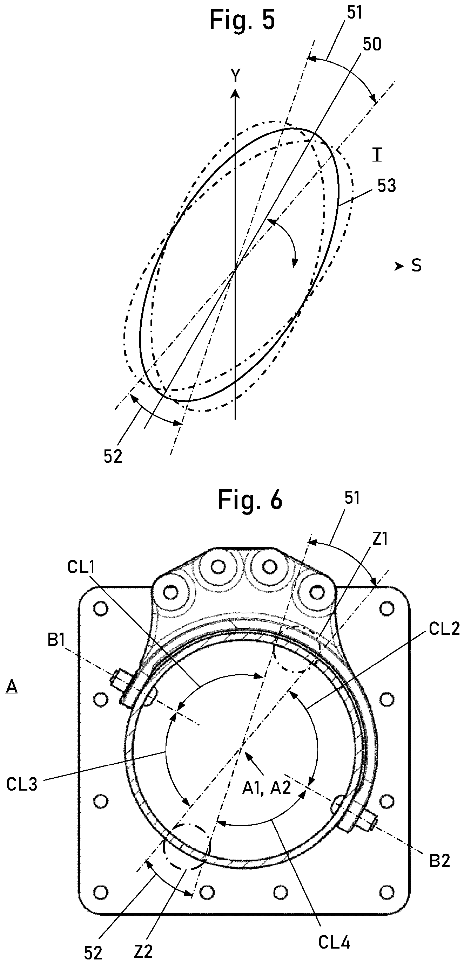

With reference to Fig. 1 and Fig. 2, a vibrating machine 10 will be described by way of example of a vibratory screen similar to the screening machine detailed above. A screen frame 20 comprises opposite arranged side panels 23 extending in a longitudinal direction of the screen. A receiving end 40 is provided for receiving material to be processed in a general process direction along a machine direction S to a downstream discharge end 41, where the machine direction S is along the longitudinal direction of the screen. In particular, a deck 21 receives the material and facilitates the processing of the material. The deck 21 is held and supported by an array of longitudinally extending deck rails 24 fixedly attached to an array of transverse cross beams 12 respectively extending between the side panels 23 and transverse to the machine direction S. One or more vibration device 22 is provided and operable to cause the cross beams 12 to vibrate according to a vibration pattern. The vibrating motion is transferred from the cross beams 12 to the deck 21 for processing material thereon, such as metalliferous and non-metalliferous ore, rock and waste material, various earth materials as mentioned, which may also include soil materials such as coal. The vibration device 22 may comprise or consist of rotating eccentric masses which produce a linear force output/acceleration on the screen deck. The force output can also be circular or elliptical similar to that shown in Fig. 5.

With added reference to **Fig. 2****,** the deck 21 comprises an arrangement of deck panels 25 connected to the longitudinally extending deck rails 24 facilitating connection between the deck panels 25 and the connecting cleats 30. The deck panels 25 may comprise a plurality of individual elements. The deck rails 24 are respectively connected to the cross beams 12 by means of the connecting cleats 30. Thus, the cleat 30 is configured for transferring forces from the cross beam 12 to the deck panels 25 via the deck rails 24 during operation of the vibratory machine 10. In operation, the deck panels 25 carry the significant load of the material subject to processing. Accordingly, the connecting cleat 30 is designed to withstand substantial forces, such as oscillating forces, over extensive periods of operation without failure.

The cleat 30 comprises a cleat body 31 and a connecting portion in shape of a end plate 32 for connecting the deck rails 24 thereto. The cleat body 31 has an inner face 37 that curves about a cleat center axis A1 and defines a cleat inner circumference 37a. The cleat inner face 37 is configured to be arranged coaxial with a cross beam center axis A2 whereby the respective axes A1 and A2 are aligned. The cleat body 31 is provided with at least one first mechanical attachment means 33 and at least one second mechanical attachment means 34 facilitating fixedly attaching the cleat 30 to the cross beam 12.

As shown in Fig.2, the first mechanical attachment means 33 may be proximal mechanical attachment means provided proximal the end plate 32 and thus proximal the deck panels 25. The second mechanical attachment means 34 may be distal mechanical attachment means provided distal the end plate 32 and thus distal the deck panels 25 in relation to the first mechanical attachment means 34, as will be detailed further in the below. Accordingly, at the respective locations of the mechanical attachment means 33, 34, attachment between cleat 30 and the cross beam 12 may be realized.

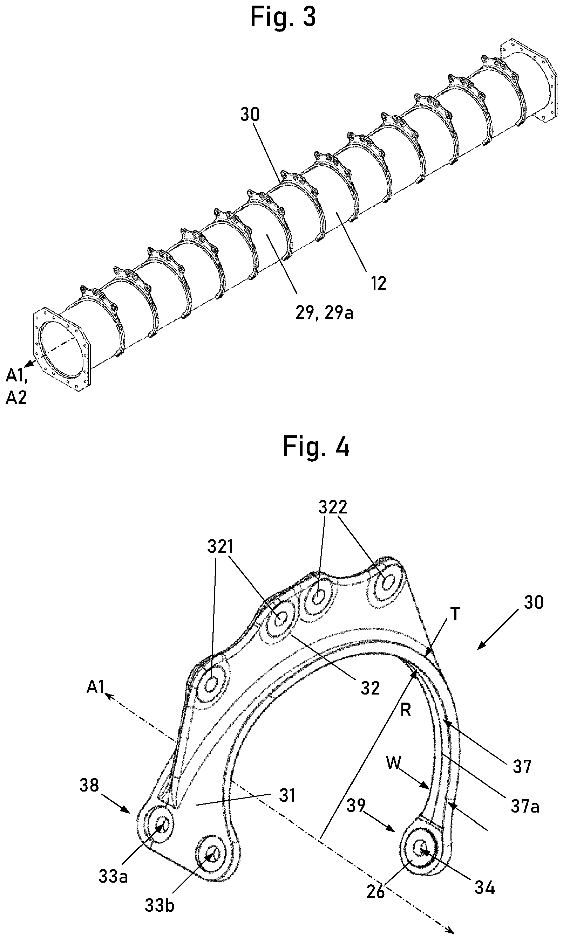

With added reference to **Fig.3** and **Fig.4****,** the first mechanical attachment means 33 may in some implementations comprise at least one radially extending through-opening in the cleat 30 that forms a first cleat aperture 33 of the cleat 30. Corresponding at least one first through-opening(s) may be provided in the cross beam 12, forming a first cross beam aperture 14 in the cross beam 12. The first cleat aperture 33 is configured to be aligned with the first cross beam aperture 14 when the cleat 30 is mounted to and coaxially arranged with the cross beam 12. The cleat 30 may thereby be attached to the cross beam 12 at the location of the first attachment means 33 by means of the first aperture 33 of the cleat 30 being at least partially aligned with the at least one first cross beam aperture 14 for receiving therethrough a fastening element, such as a bolt, of a first mechanical fastening arrangement 27, such as a nut and bolt or equivalent fastening arrangement, whereby the fastening element extends through both the first cleat aperture 33 and the first cross beam aperture 14. The first cleat aperture 33 thus facilitates a point of anchorage to the cleat 30 at the first cleat aperture 33. Correspondingly, the first cross beam aperture 14 facilitates a point of anchorage to the cross beam 12. In this sense, the first cleat aperture(s) 33 and in a corresponding manner also the second cleat aperture 34, respectively constitutes mechanical attachment means. The cleat 30 may thereby be fixedly attached the cleat 30 to the cross beam 12.

In some aspects, the cross beam comprises a first cross beam aperture 14 and a second cross beam aperture 15 provided along the cross beam outer circumference 29a. The first cross beam aperture 14 forms with the second cross beam aperture 15 a central angle at the cross beam center axis A2. The central angle may be in the range of 110 to 220 degrees, such as about 180 degrees.

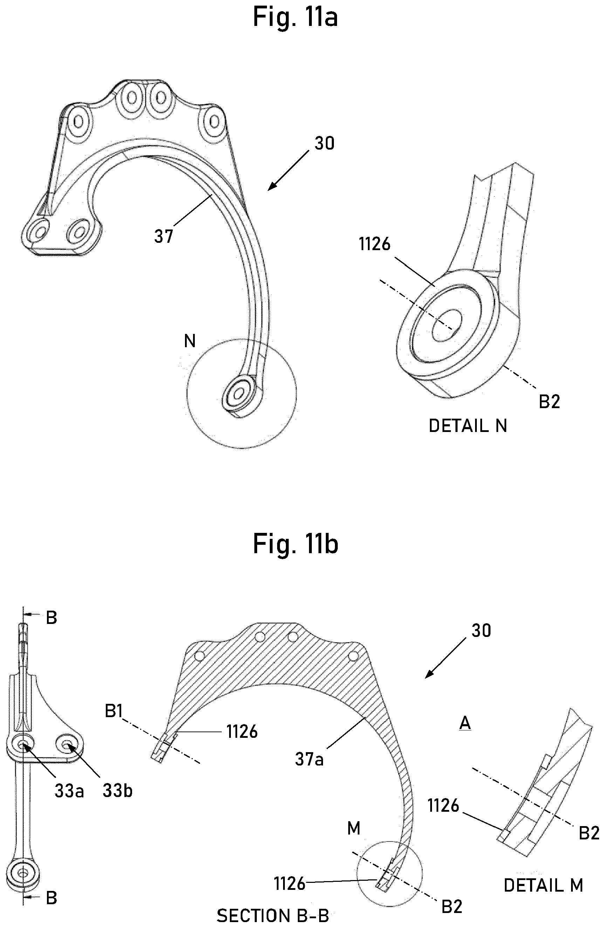

In some aspects, such as shown in Fig. 4 and Fig. 11b, the at least one first cleat aperture 33 comprises a set of neighboring first cleat apertures 33a and 33b. Correspondingly, the at least one cross beam first aperture 14 comprises a set of cross beam first apertures 14, whereby a respective first cleat aperture of the set of first cleat apertures may be aligned with a respective first cross beam aperture of the set of first cross beam apertures, as detailed above.

The first cleat apertures 33a, 33b of the set of first cleat apertures 33 being arranged axially distanced from each other along the cleat center axis A1. One first cleat aperture 33a of the set of first cleat apertures 33 and the second cleat aperture 34 may be provided in a first axial plane of the cleat 30 and the other first cleat aperture 33b of the set of first cleat apertures 33 may be provided in a second axial plane of the cleat 30 that is displaced from the first axial plane. As seen in a direction along the cleat center axis A1, the first cleat apertures 33 of the set of first cleat apertures 33 may be aligned and overlapping. In any implementation, the cleat 30 may comprises a single second cleat aperture 34.

Accordingly, the second attachment means 34 comprises at least one radially extending through-opening in the cleat 30 that forms a second cleat aperture 34 of the cleat 30. At least one corresponding second through-opening is provided in the cross beam 12 and forms a second cross beam aperture 15 in the cross beam 12. The cleat 30 may thereby be assembled to the cross beam 12 at the location of the second attachment means 34 by means of the second cleat aperture 34 being at least partially aligned with the second cross beam aperture 15 for receiving therethrough a fastening element, such as a bolt, of a second fastening arrangement 28, such as a nut and bolt or equivalent fastening arrangement, for fixedly attaching the cleat 30 to the cross beam 12.

The above detailed fastening arrangements 27, 28 may comprise any of standard huck bolts, standard bolts with Nylon insert lock nuts, prevailing torque lock nuts, rivets and swaged collar fasteners or combinations thereof.

Respective opposite end portions of the cross beams 12, in the longitudinal direction of the cross beam 12, comprises an end flange 13 that mounts to the frame 20, as shown in Fig. 3.

Further to Fig.4, a width W of the cleat 30 extends along the cleat center axis A1 and the width W comprises a central narrow portion forming a waist at a cleat body center plane Bc between a first proximal end portion 38 and an opposite distal second end portion 39. As is further derivable from Fig. 4, the cleat body width W tapers from the opposite cleat end portions 38, 39 towards the central narrow portion. A corresponding end plate width of the end plate 32 may be substantially uniform and may be less than the cleat body width W. The configuration detailed above is beneficial in terms of weight of the cleat 30.

Indicated in Fig. 4 is a radius of curvature R of the cleat inner circumference 37a seen in an axial plane A, wherein the center of curvature is at the cleat center axis A1.

A cleat body thickness T of the cleat body 31 extends in a radial direction of the cleat 30. The cleat body thickness T may be substantially uniform along the circumferential direction of the cleat 30, such as along the cleat inner circumference 37a. The body thickness T may be less than the cleat body width W.

Referring again to Fig. 2, as has been mentioned hereinbefore, the cross beams 12 may, during operation, vibrate in accordance with various vibration patterns depending on application. In particular, a respective cross beam center axis A2 may, at least substantially, vibrate along a stroke line 50 as seen in an axial plane transverse the cross beam center axis A2. By way of example, vibration patterns may include linear vibration and two-dimensional patterns such as elliptical vibration as will be further elucidated in relation to Fig.5. Fig. 2 however schematically illustrates a vibration pattern wherein the cross beams displace in a linear pattern along what is commonly referred to as a line of stroke (LOS) herein also referred to as stroke line 50.

**Fig. 5** schematically illustrates two exemplary vibration patterns commonly employed by vibratory equipment. In some implementations, cross beam center axis A2 may, during use, vibrate/oscillate along the stroke line 50 having a vertical component in the vertical direction V and a horizontal component, that is transverse the longitudinal center axis A2, such as along the machine direction S.

The stroke patterns in Fig. 5 are two-dimensional and shown in a plane that is transverse the cross beam center axis A2, corresponding to the axial plane A of the cleat 30. In particular, Fig. 5 shows an elliptical pattern 53 that is an approximation of the dotted elliptical patterns illustrated in Fig. 5 and based on which an equivalent stroke line 50 may be approximated and derived. Similarly, an appreciation of an actual stroke line 50 may be derived from an actual linear stroke pattern that lay within in a stroke sector 51 during operation of the vibratory machine 10, as schematically illustrated in Fig. 5. That is, Fig. 5 shows a proximal stroke sector 51 and a distal stroke sector 52 within which actual lines of stroke may typically divert during operation of the vibratory machine 10. The stoke sectors 51 and 52 may typically have a respective central angle in respect of the cross beam center axis A2 that is in the range of 0 to 45 degrees, typically about 30 degrees.

The stroke line 50 is commonly understood as a theoretical concept. The stroke line 50 may typically be calculated during design of the vibratory machine 10 and subsequently measured during tests in a per se known manner. Such testing may reveal that determined actual strokes lay within the stroke sector 51.

It is noted that in some vibratory machines the stroke line 50 may be variable, such as with respect of the machine direction S, and it should be appreciated that the exemplary illustrations of the stroke line 50 shown herein, such as inclination of the stroke line 50 with respect of a machine direction S, is to be understood as serving the purpose of exemplification.

In any respect, the implementations of the cleat 30 as detailed herein may be advantageous when employed in vibratory machines applying a linear stroke line 50. Thus, in some implementations the vibratory machine 10 may be configured to vibrate the deck 21 in accordance with a linear stroke pattern, that is, have a linear stroke line 50.

With general reference to **Fig. 4****,** **Fig.6****,** **Fig.7** and **Fig.8** certain features of the cleat 30 will be discussed in the below.

As has been detailed hereinbefore, the cleat center axis A1 is substantially aligned and coaxial with a cross beam longitudinal center axis A2 when the cleat 30 is mounted to the cross beam 12. Fig. 6 to Fig.8 show the cleat 30 in an axial plane A of the cleat 30 that is thus transverse the cleat center axis A1.

The cleat 30 comprises a cleat body 31 having a curved cleat inner face 37 that curves about the cleat center axis A1 for coaxial arrangement with a correspondingly curved cross beam outer face 29. The cleat inner face 37 defines in the axial plane A, a cleat inner circumference 37a extending in a circumferential direction of the cleat 30, such as about the cleat center axis A1. Correspondingly, the cross beam outer face 29 defines in an axial plane of the cross beam 12 a cross beam outer circumference 29a. The cleat inner face 37 is a surface and has a circumferential extension in the circumferential direction of the cleat body 31, and an axial extension along, such as parallel to, the cleat center axis A1. The cleat inner face 37 may preferably be configured to be brought into surface contact with at least a portion of the cross beam outer face 29, such as when the cleat inner face 37 is arranged coaxial with the cross beam outer face 29.

The cross beam 12 may in any embodiment be cylinder tubular and thus comprise a circular cross section and thus a circular outer circumference 29a. Thereby the cross beam outer face 29 may in any embodiment have a cylindrical shape. However, other curved shapes are of course conceivable within the spirit of the invention, such as cross beams having elliptical or oval transverse cross sections.

Thus, in some embodiments, the cleat inner face 37 may have an annular shape. That is, the cleat inner circumference 37a may be arc-circular in the axial plane A.

The cleat inner face 37 extends between the first end portion 38 and the opposite second end portion 39 of the cleat body 31. Alternatively, or in addition, the cleat inner face 37 extends at least from the first attachment means 33 to the second attachment means 34 of the cleat body 31. Alternatively, or in addition, the cleat inner face 37 extends from the first end portion 38 to the opposite second end portion 39 of the cleat body 31.

In some embodiments, the first end portion 38 is a proximal end portion that is proximal the end plate 32, the second end portion 39 is a distal end portion that is distal to the end plate 32 in relation to the first end portion 38.

The first cleat aperture 33 is provided at the first end portion 38. The second cleat aperture 34 is provided at the second end portion 39.

A radius of curvature R of the cleat inner face 37 may substantially correspond to a radius of curvature of the cross beam outer face 29. However, as will be detailed further in herein, a gasket 26 or like arrangement may be provided and accommodated interspaced between at least a portion of the cleat inner face 37 and at least a portion of the cross beam outer face 29. Accordingly, at least a portion of the cleat inner face 37 may comprise a radius of curvature that differ from the outer circumference of the cross beam 29.

The provision of gaskets 26, 1026, 1126 is associated with a number of advantages, including noise reduction through damping, providing friction between the cleat 30 to the cross beam 12 and thus ease of fitting the cleat 30 to the cross beam 12. Further, gaskets 26, 1026, 1126 prevent water ingress into the cross beam 12 by sealing an exterior of the cross beam 12 from an interior of the cross beam 12. In particular, such gaskets 26, 1026, 1126 may seal between the cleat inner face 37 and the cross beam outer face 29 and or around the cross beam outer face 29 and the cleat mounting faces surrounding apertures 33 and 34.

As detailed above, the cleat 30 comprises the end plate 32 for facilitating connection of the deck rails 24 and the cleat 30. The end plate 32 may extend in an axial plane A that is thus transverse the cleat center axis A1. The end plate 32 projects in a radial direction of the cleat 30, such as in a distal direction in relation to the cleat center axis A1. Preferably, the end plate 32 projects radially beyond the cleat body 31. This configuration facilitates weight savings. By way of example, the end plate 32 may be a member, such as a plate member, connected to the cleat body 31 or it may be an end plate integrally formed with the cleat body 31.

The end plate 32 may comprise third mechanical attachment means 321, 322 for fixedly attaching the deck rails 24 to the cleat 30. In the instant embodiment the third attachment means 321, 322 comprises through holes or bossings, in particular axial apertures extending through the end plate 32 and along the cleat center axis A1 and that form sets of axial apertures 321, 322 in the end plate 32. In some implementations, the end plate 32 is provided with two sets of axial apertures 321, 322 wherein a respective set of the two sets of apertures 321, 322 is configured to cooperate with, such as align with, a corresponding set of apertures of a deck rail 24, for facilitating attachment of the deck rail 24 to the end plate 32. By way of example, the deck rails 24 may be fixedly attached to the end plate 32 by means of third mechanical fastening arrangements 36, such as a nut and bolt arrangement or equivalent. A respective set of apertures of the set of apertures 321, 322 may serve to attach a respective deck rail 24, as shown in Fig. 2. Alternatively, the set of apertures 321, 322 may serve to attach a single deck rail 24 to the cleat 30.

The above detailed third fastening arrangements 36 may likewise comprise mechanical fastening elements including any of standard huck bolts, standard bolts with Nylon insert lock nuts, prevailing torque lock nuts, rivets and swaged collar fasteners or combinations thereof.

In applying the considerations elucidated in relation to Fig. 5 to the configuration of the cleat 30 and the cross beam 12, **Fig. 6** attempts to illustrate how the proximal and distal stroke sectors 51, 52 for a linear stroke pattern maps on the cross beam 12. In brief, it has been devised that the cross beam 12 is particularly subjected to stress in areas of the cross beam 12 that are in the vicinity of the stroke line 50.

First stress concentration zone Z1 and a second stress concentration zone Z2 respectively denotes zones particularly subjected to stress, and consequently particularly fatigue prone, can been observed at locations of the cross beam 12 on which these stroke sectors 51 and 52 respectively maps. In addition to this, as explained hereinbefore, the cross beams 12 are commonly provided with through openings for attaching a connecting cleat. As explained hereinbefore, it has been devised that the provision of through holes at positions at or in the vicinity the stress zones Z1, Z2 may be detrimental the fatigue life of the cross beam 12.

Fig. 6 shows an exemplary embodiment of the instant invention wherein respective points of attachment between the connecting cleat 30 and the cross beam 12 are arranged so as to provide ample clearance between each of the points of attachment and each of the first stress zone Z1 and the second stress zone Z2. That is, the first attachment means 27 and the second attachment means 34 are each provided distanced from each stress zone of the first stress zone Z1 and the second stress zone Z2. In other words, the first attachment means 33 and the second attachment means 34 are provided suitably distanced from the stroke line 50 to the benefit of fatigue life of the cross beam 12.

As derivable from Fig. 6, the first attachment means 27 and the second attachment means 28 are respectively arranged a position along the curved cleat inner circumference 37 that is equidistant the first stress zone Z1 and the second stress zone Z2.

That is to say, the first cleat aperture 33 and the second cleat aperture 34 are respectively arranged a respective position along the cleat body 31 that is equidistant the first stress zone Z1 and the second stress zone Z2 of the cross beam 12 that are in the vicinity of the stroke 50.

The above detailed configuration benefits the maintaining of structural integrity of the cross beam 12 and improves fatigue life.

As shown in Fig. 6, a first cleat aperture center axis B1 of the at least one first cleat aperture 33 has a central clearance angle CL1 to the proximal stroke sector 51 and thus the proximal stress zone Z1. Further, the center axis B1 of the at least one first cleat aperture 33 has a central clearance angle CL3 to the distal stroke sector 52 and thus the distal stress zone Z2. Correspondingly, a cleat second aperture center axis B2 of the at least one second cleat aperture 34 has a central clearance angle CL2 to the proximal stroke sector 51 and thus the proximal stress zone Z1. Further, the center axis B2 of the at least one second cleat aperture 34 has a central clearance angle CL4 to the distal stroke sector 55 and thus the distal stress zone Z2. In any embodiment, any of B1 and B1 is normal to the cleat inner circumference 37.

In any embodiment, any of clearance angles CL1, CL2, CL3, CL4 may be in the range of 40 to 95 degrees, preferably CL1, CL2, CL3 and CL4 are similar or substantially equal. It should be noted that the clearance angles CL1 to CL4 are formed as respective central angles at the cleat center axis A1.

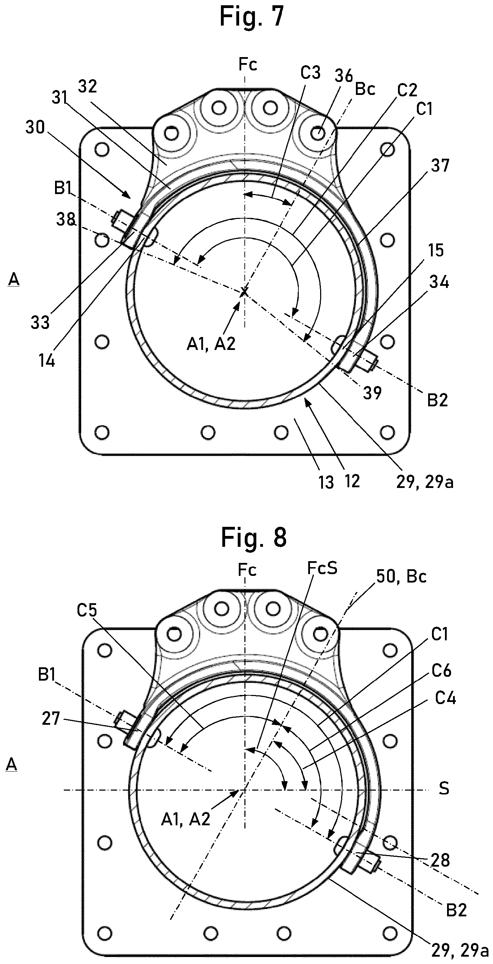

**Fig. 7** shows the first mechanical attachment means 33 forming with the second mechanical attachment means 34 a first central angle **C1** at the cleat center axis A1 in the axial plane A, wherein the first central angle C1 is in the range of 110 to 220 degrees, preferably about 180 degrees. In particular, the first mechanical attachment means 33 and the second mechanical attachment means 34 are provided distanced from each other, in a circumferential direction of the cleat, along the curved cleat inner face 37 to form the first central angle C1 at the cleat center axis A1. More in particular, the first mechanical attachment means 33 and the second mechanical attachment means 34 are provided distanced from each other along the cleat inner circumference 37a to form the first central angle C1 at the cleat center axis A1.

That is, the first central angle C1 may be formed in the axial plane A by lines drawn between the cleat center axis A1 and a respective of the first attachment means 33 and the second attachment means 34. Alternatively, or in addition, the first central angle C1 may be formed in the axial plane A by the first cleat aperture center axis B1 and the second cleat aperture center axis B2.

Moreover, the cleat body 31 as such forms a second central angle **C2** at the cleat body center axis A1. In particular, opposite cleat end portions 38, 39, such as free end portions, form the second central angle C2. The second central angle C2 may be in the range of 132 to 242 degrees, preferably about 222 degrees.

Certain asymmetrical properties of the cleat 30 can be observed from Fig. 7. In particular, the connecting portion in shape of the end plate 32 is provided asymmetrically on the cleat body 31. The cleat body 31 has a cleat body center plane Bc in respect of the opposite cleat end portions 38, 39 of the cleat body 31 and that is parallel to the cleat center axis A1, as seen in the axial plane A of Fig.7. That is, the cleat body center plane Bc may be a geometrical center plane at a midpoint between the opposite cleat end portions 38, 39.

Likewise, the end plate 32 may have an end plate center plane Fc parallel the cleat center axis A1. The end plate center plane Fc may likewise be a geometrical center plane. For example, the end plate center plane Fc may be at the center of the third attachment means 36, for example between the two sets 321, 322 of third mechanical attachment means 36, as shown in Fig. 7 and Fig. 8. The cleat body center plane Bc forms with the end plate center plane Fc a central offset angle **C3** at the cleat center axis A1 in the axial plane A. In other words, a center of gravity of the end plate 32 may be offset relative a center of gravity of the cleat body 31. Put differently, a center of gravity of the cleat 30 may be offset relative a center of gravity of the cleat body 31, as seen in axial plane A.

With added reference to **Fig. 8****,** the first attachment means 27, such as the first cleat aperture 33, and the cross beam first aperture 14 forms with the cleat body center plane Bc, a central fifth angle **C5.** In particular, the first cleat aperture center axis B1 forms the fifth angle C5 with the cleat body center plane Bc. The fifth angle C5 may be in the range of 55 < C5 < 110 degrees. In some implementations, as in the present shown in Fig. 8, Bc is substantially aligned with the stroke line 50 whereby the first cleat aperture 33 and the first cross beam aperture 14 forms with the stroke line 50 a central angle corresponding to the fifth angle C5.

The second attachment means 34, such as the second cleat aperture 34, and the second cross beam aperture 15 forms with the cleat body center plane Bc a central sixth angle **C6.** In particular, the second cleat aperture center axis B2 forms the sixth angle C6 with the cleat body center plane Bc. Preferably, the sixth angle C6 is in the range of 55 < C6 < 110 degrees. In some embodiments, Bc is substantially aligned with the stroke line 50 wherein the second cleat aperture 34 and the second cross beam aperture 15 forms with the stroke line 50 a central angle corresponding to the fifth angle C6.

The first and second attachment means 33, 34 may due to their configuration detailed herein suitable for mounting the connecting cleat 30 to a cross beam 12 in a vibratory equipment 10 according to the disclosure. Such vibratory equipment 10 may be suitable for heavy duty industrial applications within the mining and construction industry.

In some embodiments, a respective of the first and second mechanical attachment means 27 and 28 is provided along the circumference 29 of the cross beam 12 at a respective midpoint between zone Z1 and zone Z2.

The stroke line 50 forms with the machine direction S a fourth central stroke angle **C4.** The stroke angle C4 may be in the range of 30 to 90 degrees. This this it should be noted that the machine direction S may be parallel to the horizontal.

In some embodiments, and angle **FcS** is formed between the end plate center plane Fc and the machine direction S, may be about 90 degrees when the cleat 30 is mounted to the cross beam 12.

As derivable from the appended drawings, the cleat features asymmetrical properties, some of which will be further detailed.

Referring again to the end plate 32, the end plate 32 is provided for connecting deck rails the cleat 30. The end plate 32 projects radially from the cleat body 31 in a plane transverse the cleat center axis A1. That is, the end plate 32 projects from the cleat body 31 in a distal direction in respect of the cleat center axis A1. The end plate 32 may project radially beyond the cleat body 31.

As is appreciated from Fig. 8, the end plate 32 is provided asymmetrically on the cleat body 31 as seen in the axial plane A. The end plate 32 is preferably provided asymmetrically relative to a cleat body center plane Bc of the cleat body 31. In particular, the end plate 32 may be provided substantially on one side of the cleat body center plane Bc as seen in the axial plane A.

The at least one set of mechanical attachment means 321, 322 are provided on one side of the body center plane Bc that is parallel the cleat center axis A1.

The end plate 32 is provided asymmetrically may comprise the end plate 32 being arranged substantially on one side of the cleat body center plane Bc that is parallel the cleat center axis A1.

The axial apertures 321, 322 are provided substantially on one side of the cleat body center plane Bc that is parallel the cleat center axis A1.

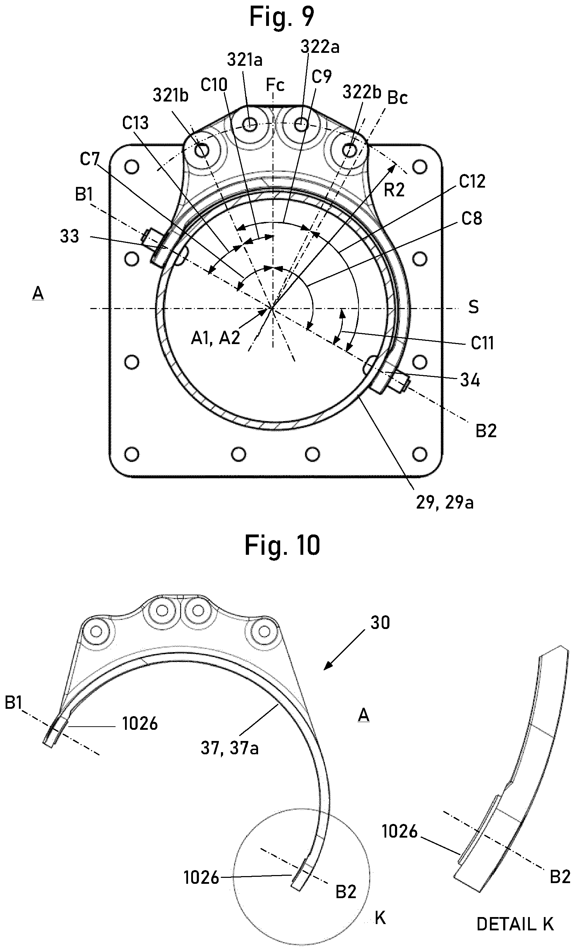

With added reference to **Fig. 9****,** an end plate center plane Fc of the end plate 32 is parallel the cleat center axis A1 forms at the cleat center axis A1 a central seventh angle **C7** with the first cleat aperture 33. In particular, the end plate center plane Fc forms at the cleat center axis A1 the seventh angle C7 with the first cleat aperture center axis B1. The seventh angle C7 may be in the range of 25 to 80 degrees, preferably about 60 degrees.

The third attachment means 321, 322 comprises or may consist of a first axial aperture 321a, a second axial aperture 321b, a third axial aperture 322a and a fourth axial aperture 322b. The first set of third attachment means 321 comprises or may consist of first axial aperture 321a, second axial aperture 321b. The second set of third attachment means 36 comprises or may consist of the third axial aperture 322a and the fourth axial aperture 322b. The third attachment means 321, 322 are due to their configuration detailed herein suitable for mounting the deck rails 24 to the connecting cleat 30 in a vibratory equipment 10 according to the disclosure. Such vibratory equipment 10 may be suitable for heavy duty industrial applications within the mining and construction industry.

The first attachment means 33 is provided proximal to the third attachment means 36 in relation to the second attachment means 34, for example from a circumferential point of view, such as in a direction along the cleat inner circumference 37a. Put differently, the second attachment means 34 is provided distal to the third attachment means 36 in relation to the first attachment means 33.

The first attachment means 33 may form with the third attachment means 321, 322, a thirteenth central angle **C13** at the cleat center axis A1.

The second axial aperture 321b of the third attachment means 321, 322 is provided proximal to and/or neighbors to the first attachment means 33 and forms a thirteenth central angle **C13** therewith at the cleat center axis A1.

In particular, the first attachment means 33 may form with a neighboring and/or proximal third attachment means 321b of the third attachment means 321, 322 the thirteenth central angle **C13** at the cleat center axis A1.

As derivable from Fig. 9, the thirteenth central angle C13 may correspond to the seventh angle C7 minus the tenth angle C10, alternatively the seventh angle C7 minus half of the ninth angle C9.

The second attachment means 34 may form with the third attachment means 321, 322, a twelfth central angle **C12** at the cleat center axis A1.

The fourth axial aperture 322b of the third attachment means 321, 322 is provided proximal to and/or neighbors to the second attachment means 34 and forms a twelfth central angle **C12** with the second attachment means 34 at the cleat center axis A1.

In some embodiments, the twelfth central angle C12 is greater than the thirteenth central angle C13. In some embodiments, C12 may be at least 1.5 times of C13. In some embodiments, C12 is at least twice the size of C13.

Alternatively, or in addition, the second attachment means 34 forms with the neighboring and/or proximal third attachment means 322b of the third attachment means 36, 321, 322, the twelfth central angle C12 at the cleat center axis A1. Preferably, C12 is greater than C13, such as at least 1.5, or at least 2 times the size of C13. As derivable from Fig. 9, C12 may correspond to the angle of C8 minus the angle of C10, or the angle of C8 minus half the angle of C9.

The end plate center plane Fc forms an eight angle **C8** with the second attachment means 28, 34. Preferably, the angle of C8 is greater than the angle of C7, such as at least 1.5 times the size of C7. The angle of C8 may be in the range of 85 to 140 degrees. In particular, the end plate center plane Fc forms at the cleat center axis A1 the eight angle C8 with the second cleat aperture center axis B2.

It is also noted that the second cleat aperture center axis B2 forms a central eleventh angle C11 with the machine direction S. The eleventh angle **C11** may be in the range of -5 to 50 degrees, preferably about 30 degrees.

The third mechanical attachment means 36, 321, 322 are provided within a circle sector that has a central angle **C9** at the cleat axis A1 in the range of 30 to 90 degrees, preferably about 45 degrees as shown in Fig. 9.

The central angle **C10** formed between the end plate center plane Fc and respective laterally outermost attachment means 321b of the third mechanical attachment means 36, 321, 322 corresponds to half the angle of C9.

It is noted that any of the respective angles C1, C2, C3, C4, C5, C6, CL1 and CL2 may be measured along the cleat inner circumference 37a, as illustrated in the appended Figures.

The third mechanical attachment means 36, 321, 322 are provided within a radius R2 corresponding approximately to 1.8 times the radius of curvature R of the cleat inner circumference 37.

Fig. 10 and Fig. 11a - Fig. 11b show implementations where the cleat 30 is provided with gaskets 26. Each cleat aperture 33, 34 is associated with a respective gasket 1026, 1126 configured to seal between the cleat 30 and the cross beam outer face 29. A respective gasket of the gaskets 1026, 1126 comprises a through opening that is contiguous with a respective cleat aperture of the cleat apertures 33, 34 when the gaskets 1026, 1126 are arranged on the cleat 30.

As derivable from the embodiments shown in Fig. 10, the gaskets 1026 may be received in respective depressions in the cleat inner face 37, such as slidably received or press fitted into the depressions.

As derivable from the embodiments shown in Fig. 11a - Fig.11b, a respective gasket of the gaskets 1126 is provided at a respective end of the opposite cleat ends 38, 39 of the cleat 30. The gaskets 1126 are arranged to form respective intermediate layers between at least a portion of the cleat 30 and the cross beam outer face 29 when the cleat 30 is mounted to the cross beam 12. The provision of gaskets 1126 brings about the advantage of reducing mechanical wear by avoiding metal-to-metal contact between the cleat 30 and the cross beam 12, which are both made of metal.

In some embodiments, each gasket 26, 1026, 1126 projects in radially inwards direction beyond the cleat inner face 37, as shown in Fig. 10 and Fig. 11a - Fig.11b. This configuration facilitates requisite sealing function when mounted to the cross beam 12.

The gaskets 26, 1026, 1126 may comprise a polymer-based material, such as an elastomeric material, such as rubber.

In the above, all references to "a/an/the [element, device, component, means, step, etc.]" are to be interpreted openly as referring to at least one instance of the element, device, component, means, step, etc. unless explicitly stated otherwise.

As used herein, the term "arc-circular" as used herein, intends to denote a portion of a circle having a uniform radius of curvature or essentially uniform radius of curvature.

As used herein, the term "cleat center axis" as used herein, intends to denote an axis that is at the center of curvature of the cleat inner circumference.

The preceding description has been presented with reference to exemplary embodiments. However, other embodiments and/or features of the embodiments disclosed but not detailed hereinabove may be employed. Furthermore, persons skilled in the art and technology to which these embodiments pertain will appreciate that still other alterations and changes in the described structures may be practiced without meaningfully departing from the principle and scope of these embodiments. Additionally, the foregoing description should not be read as pertaining only to the precise structures described and shown in the accompanying drawings, but rather should be read as consistent with and as support for the following claims, which are to have their fullest and fairest scope.

## Claims

1. A connecting cleat (30) for connecting deck rails (24) to a cross beam (12) in a vibratory equipment (10) for processing a soil material, such as a vibratory screening machine or a vibratory feeder, the cleat (30) comprising
a cleat body (31) defining a cleat inner circumference (37a) that curves about a cleat center axis (A1) of the cleat (30) for coaxial arrangement with a correspondingly curved cross beam outer circumference (29a) of the cross beam (12), and
an end plate (32) extending in a radial direction of the cleat (30) and along a portion of the cleat inner circumference (37a), such as a limited portion of the cleat inner circumference (37a), for connecting one or more deck rails (24) thereto,
wherein the cleat body (31) comprises at least one first mechanical attachment means (33) and at least one second mechanical attachment means (34) for attaching the cleat (30) to the cross beam (12), and
wherein the first mechanical attachment means (33, 33a, 33b) forms with the second mechanical attachment means (34) a first central angle (C1) at the cleat center axis (A1) in an axial plane (A), wherein the first central angle (C1) is in the range of 110 to 220 degrees, preferably about 180 degrees.

2. The cleat (30) according to claim 1, wherein the at least one first mechanical attachment means (33) is provided proximal the end plate (32) and the at least one second mechanical attachment means (34) is provided distal the end plate (32) relative the first mechanical attachment means (33).

3. The cleat (30) according to claim 1 or 2, wherein the first mechanical attachment means (33) and the second mechanical attachment means (34) each comprises at least one cleat aperture (33a, 33b, 34) extending radially through the cleat body (31), in particular the first attachment means (33) comprises at least one first cleat aperture (33a, 33b) and the second mechanical attachment means (34) comprises at least one second cleat aperture (34).

4. The cleat (30) according to any one of the preceding claims 1 to 3, wherein the end plate (32) is provided asymmetrically relative the cleat body (31) in the axial plane (A).

5. The cleat (30) according to any one of the preceding claims 1 to 4, wherein the end plate (32) comprises third mechanical attachment means (321, 322) for connecting deck rails (24) to the end plate (32) when the cleat (30) is mounted to the cross beam (12), preferably the third mechanical attachment means (321, 322) comprises at least one set of through going axial apertures (321, 322) extending in an axial direction of the cleat (30) along the cleat center axis (A1).

6. The cleat (30) according to any one of the preceding claims 1 to 5, wherein the first attachment means (33) is provided proximal to the third attachment means (321, 322) in relation to the second attachment means (34).

7. The cleat (30) according to any one of the preceding claims 1 to 6, wherein a end plate center plane (Fc) of the end plate (32) forms a central offset angle (C3) with the cleat center plane (Bc) at the cleat center axis (A1) in the axial plane (A), wherein the offset angle (C3) is greater than zero, preferable the central offset angle (C3) is in the range of 5 to 55 degrees, more preferably 25 to 35 degrees, such as about 30 degrees.

8. The cleat (30) according to any one of the preceding claims 1 to 7, wherein the curved cleat inner circumference (37a) is arc-circular in the axial plane (A) and extends at least between the cleat first aperture (33) to the cleat second aperture (34).

9. The cleat (30) according to any one of the preceding claims 1 to 8, wherein a width (W) of the cleat body (31) extends along the cleat center axis (A1), wherein the width tapers from opposite ends (38, 39) of the cleat (30).

10. The cleat (30) according to any one of the preceding claims 1 to 9, wherein opposite cleat end portions (38, 39) of the cleat body (31) form a central second angle (C2) at the cleat center axis (A1), wherein the second angle (C2) is in the range of 132 to 242 degrees, preferably 180 to 200 degrees, more preferably about 222 degrees.

11. The cleat (30) according to any one of the preceding claims 1 to 10, wherein the end plate (32) has an end plate center plane (Fc) parallel the cleat center axis (A1), wherein the end plate center plane (Fc) forms respectively with the first attachment means (33) a central seventh angle (C7) at the cleat center axis (A1), and a central eighth angle (C8) with the second attachment means (34) at the cleat center axis (A1), wherein the central eighth angle (C8) is greater than the central seventh angle (C7).

12. The cleat (30) according to any one of the preceding claims 1 to 11, wherein the cross beam (12) comprises at least one first cross beam aperture (14) and at least one second cross beam aperture (15) provided along the cross beam outer circumference (29a), wherein the first cross beam aperture (14) forms with the second cross beam aperture (15) a central angle at the cross beam center axis (A2), wherein the central angle is in the range of 110 to 220 degrees, such as about 180 degrees.

13. A vibratory equipment (10), such as a screening machine or a vibratory feeder, for processing a soil material, the vibratory equipment comprising
at least one cross beam (12) extending in a direction transverse a longitudinal machine direction (S) of the vibratory equipment (10) for supporting a material processing deck (21) of the vibratory equipment (10),
wherein the cross beam (12) comprises one or more connecting cleat (30) according to any one of the preceding claims, the cleat (30) connecting one or more deck rails (24) of the deck (21) to the at least one cross beam (12).

14. The vibratory equipment (10) according to claim 13, wherein the vibratory equipment (10) is configured to vibrate the cross beam (12) such that a cross beam longitudinal center axis (A1) of the cross beam (12) oscillates along a stroke line (50) in a plane transverse a cross beam longitudinal center axis (A2), and
wherein respective first mechanical attachment means (33) and second mechanical attachment means (34) of the one or more cleat (30) are arranged along a cross beam outer circumference (29a) of the cross beam (12) to form respective central angles (C5, C6) with the stroke line (50) at the cross beam center axis (A2), wherein the central angles (C5, C6) are in the range of 25 to 140 degrees respectively, preferably about 90 degrees.

15. The vibratory equipment (10) according to the preceding claim 14, wherein the stroke line (50) forms, in a plane transverse the cross beam center axis (A2), a central stroke angle (C4) with any one or more of the machine direction (S) and a horizontal plane, wherein the stroke angle (C4) is in the range of 30 to 90 degrees.
